# EUROPÄISCHE PATENTSCHRIFT

(11) **EP 0 831 671 B1**
(45) Veröffentlichungstag und Bekanntmachung des Hinweises auf die Patenterteilung: **21.04.2004**
(21) Anmeldenummer: 97115052.9
(22) Anmeldetag: 29.08.1997
(51) Int. Cl.: H04Q 11/04, H04M 3/24

(54) **Verfahren und Kommunikationssystem zum Übermitteln von komprimierten Sprachinformationen in einem Kommunikationsnetz**
Method and communication system for transmitting compressed voice data in a communication network
Méthode et système de communication pour la transmission de données de parole dans un réseau de communication

(30) Priorität: 29.08.1996 DE 19635025; 18.07.1997 DE 19730986
(43) Veröffentlichungstag der Anmeldung: 25.03.1998
(73) Patentinhaber: SIEMENS AKTIENGESELLSCHAFT, 80333 München (DE)
(72) Erfinder: Blitz, Andre, Dipl.-Ing., 81735 München (DE); Wille, Klaus, Dipl.-Ing., 81679 München (DE); Rott, Walter, Dipl.-Ing., 82110 Germering (DE)

(56) Entgegenhaltungen:
- EP-A- 0 332 345
- EP-A- 0 504 757
- EP-A- 0 705 052
- US-A- 4 823 342
- US-A- 5 297 147
- US-A- 5 526 350

## Beschreibung

Kommunikationsnetze zur Vermittlung und Übertragung von digitalisierten Sprachinformationen sind durch meist mehrere teilweise untereinander verbundene bzw. vermaschte Kommunikationssysteme gebildet, an die jeweils Kommunikationsendgeräte angeschlossen sind. Der Verbindungsaufbau und die Verbindungssteuerung erfolgt durch Signalisierungsinformationen, wobei die digitalisierten Sprachinformationen in Nachrichtenkanälen und die Signalisierungsinformation in einem Signalisierungskanal eines multiplexten Nachrichtenstroms zwischen den Kommunikationssystemen übermittelt werden. Die digitalisierte Sprachinformation weist üblicherweise eine Bitrate von 64 oder 56 kbit/s und der multiplexte Nachrichtenstrom Bitraten von n x 64 kbit/s - beispielsweise 2048 kbit/s - auf, wobei die Nachrichtenströme zwischen den Kommunikationssystemen über festgeschaltete Übertragungswege übertragen werden.

Um die zwischen den Kommunikationssystemen angeordneten Übertragungswege und die Übertragungseinrichtungen effektiver zu nutzen, werden den Übertragungseinrichtungen Komprimiereinrichtungen zugeordnet, mit deren Hilfe die digitalisierten Sprachinformationen komprimiert - beispielsweise zu einer komprimierten Sprachinformation mit 16 kbit/s - und zu einem Nachrichtenstrom von beispielsweise 2048 kbit/s multiplext werden. An einem einen derartigen Nachrichtenstrom empfangenden Kommunikationssystem wird der multiplexte Nachrichtenstrom demultiplext und die komprimierten Sprachinformationen dekomprimiert. Bei einer durch die Signalisierungsinformation aufgebauten Verbindung zu einem Ziel-Kommunikationsendgerat dieses Ziel-Kommunikationssystems wird die dekomprimierte Sprachinformation zu dem jeweiligen Ziel-Kommunikationsendgerat ubermittelt.

In der deutschen Offenlegungsschrift DE 44 23 792 A1 ist beispielsweise eine Schaltungsanordnung zur Mehrfachausnutzung von Basiskanälen im ISDN beschrieben, bei der mittels geeigneter Wandler die in einem Basiskanal einer ISDN-Verbindung zur Datenübertragung insgesamt zur Verfügung stehende Datenbitrate von 64 KBit/s zeitversetzt auf mehrere datenreduzierte bzw. komprimierte, sprachkodierte, gemultiplexte Sprachkanäle geringerer Bitrate aufgeteilt ist.

Repräsentiert das jeweilige Kommunikationssystem gemäß der aufgebauten Verbindung ein Transit-Kommunikationssystem, so wird die jeweilige dekomprimierte Sprachinformation verbindungsgemäß vermittelt und anschließend erneut komprimiert, in einen Nachrichtenstrom eingefügt bzw. multiplext und zu dem verbindungsgemäßen weiteren Kommunikationssystem übermittelt. Das Dekomprimieren und Komprimieren in Transit-Kommunikationssystemen verursacht zeitliche Verzögerungen und Verzerrungen der Sprachinformation, die zu einer Qualitätsverringerung der übermittelten, digitalisierten Sprachinformation führen.

Eine Lösung dieses Problems findet der Fachmann beispielsweise in der europäischen Offenlegungsschrift EP 0 705 052 A. Hieraus ist ein Verfahren bekannt, bei dem über einen ersten Nachrichtenstrom an einem Kommunikationssystem empfangene komprimierte Sprachinformationen aus dem ersten Nachrichtenstrom entnommen und verbindungsgemäß, komprimiert vermittelt werden. Hierbei werden die empfangenen komprimierten Sprachinformationen aus dem ersten Nachrichtenstrom herausgefiltert, in einen speziell an die Vermittlungsbandbreite angepaßten Nachrichtenstrom eingefügt und anschließend separat komprimiert vermittelt. Anschließend werden die komprimierten Sprachinformationen aus dem Nachrichtenstrom herausgefiltert und in einen zweiten, vom Kommunikationssystem abgehenden Nachrichtenstrom eingefügt. Hierbei sind der erste und zweite Nachrichtenstrom (48) identisch.

Des weiteren ist aus der europäischen Offenlegungsschrift EP 0 332 345 A Verfahren bekannt, bei dem über einen ersten Nachrichtenstrom an einem Kommunikationssystem empfangene komprimierte Sprachinformationen aus dem ersten Nachrichtenstrom entnommen und verbindungsgemäß, komprimiert vermittelt werden und flexibel in einen zweiten Nachrichtenstrom eingefügt werden, sofern das Kommunikationssystem bezogen auf die jeweilige komprimierte Sprachinformation ein Transit-Kommunikationssystem ist.

Die der Erfindung zugrunde liegende Aufgabe besteht darin, Maßnahmen vorzusehen, durch welche eine größtmögliche Flexibilität bei der Vermittlung von komprimierten Sprachinformationen erreicht wird.

Die Aufgabe wird durch die Merkmale der Patentansprüche 1 und 8 gelöst.

Der wesentliche Aspekt des erfindungsgemäßen Verfahrens ist darin zu sehen, daß eine in einem Ursprungs-Kommunikationssystem komprimierte Sprachinformation, die über mehrere Kommunikationssysteme zu übermitteln ist, in den Transit-Kommunikationssystemen nicht dekomprimiert, sondern komprimiert vermittelt wird. Hierfür wird eine die Komprimierung anzeigende Komprimierungsinformation zusammen mit zumindest einer komprimierten Sprachinformation zwischen den Kommunikationssystemen übermittelt. Durch das erfindungsgemäße Verfahren wird eine zusätzliche zeitliche Verzögerung und eine Verzerrung der zu übermittelnden Sprachinformation gänzlich vermieden. Zusätzlich kann auf die Dekomprimierungs- und Komprimierungsmittel zumindest teilweise verzichtet werden. Für die Anpassung der komprimierten Sprachinformation an die Vermittlungsbitrate sind wirtschaftlich vorteilhaft zu realisierende Multiplexeinrichtungen vorgesehen.

Vorteilhaft werden die Komprimierungsinformationen für zumindest zwei komprimierte Sprachinformationen in einem Nachrichtenkanal des Nachrichtenstromes übermittelt. So werden beispielsweise bei komprimierten Sprachinformationen mit 16 kbit/s über 2 x 64 kbit/s-Nachrichtenströme - z.B. über eine ISDN-Verbindung zwischen zwei Kommunikationssystemen - über sieben Nachrichtenkanäle komprimierte Sprachinformationen und im achten Nachrichtenkanal die Komprimierungsinformationen für die sieben für die Übermittlung von komprimierten Sprachinformationen vorgesehenen Nachrichtenkanäle übertragen. Hierbei wird während des Verbindungsaufbaus durch jeweils eine übermittelte Komprimierungsinformation dem entfernten Kommunikationssystem mitgeteilt, ob und in welchem Nachrichtenkanal eine komprimierte Sprachinformation übermittelt wird.

Vorteilhaft werden die komprimierten Sprachinformationen und Komprimierungsinformationen zu Nachrichtenströmen von 56 bzw. 64 kbit/s oder m x 56 bzw. m x 64 kbit/s multiplext. Die Nachrichtenströme werden über festgeschaltete einzelne 64 kbit/s-Verbindungen oder über eine festgeschaltete ISDN-SO-Verbindung - 2 x 64 kbit/s - oder eine ISDN-S2-Primär-Verbindung - 32 x 64 kbit/s - geführt.

Die Komprimierung der digitalisierten Sprachinformation mit 56 oder 64 kbit/s erfolgt vorteilhaft in 2ⁿ - Schritten (n= 2,4,8,16). Bezogen auf Nachrichtenkanäle mit 64 kbit/s ist ein Komprimierung der Sprachinformation mit 16 kbit/s gemäß dem standardisierten Komprimierungsverfahren nach G.728 besonders vorteilhaft, da die Sprachqualität bei einer erheblichen Einsparung an Übertragungswegen und Übertragungseinrichtungen sehr hoch bleibt. Die komprimierte Sprachinformation, vorteilhaft 16 kbit/s wird zur Vermittlung in einem Transit-Kommunikationssystem in einen Informationsstrom mit der Vermittlungsbitrate von 64 kbit/s eingefügt.

Weitere vorteilhafte Ausgestaltungen des erfindungsgemäßen Verfahrens und Kommunikationssystems sind den weiteren Ansprüchen zu entnehmen.

Das erfindungsgemäße Verfahren und Kommunikationssystem wird anhand eines Blockschaltbildes näher erläutert.

Das Blockschaltbild zeigt ein Kommunikationssystem KS, an das Kommunikationsendgeräte KE angeschlossen sind. Die Kommunikationsendgeräte KE sowie das Kommunikationssystem KS stellen Komponenten eines Kommunikationsnetzes KN, beispielsweise eines ISDN-Kommunikationsnetzes KN, dar. Beim Ausführungsbeispiel ist das dargestellte Kommunikationssystem KS über zwei SO-Schnittstellen SO mit jeweils einem weiteren Kommunikationssystem - nicht dargestellt - des Kommunikationsnetzes KN verbunden. In der Praxis sind weitere, nicht dargestellte Verbindungen zu weiteren Kommunikationssystemen des Kommunikationsnetzes KN vorgesehen, um eine zumindest teilweise Vermaschung der Kommunikationssysteme KS untereinander zu bewirken. Alternativ, d.h. bei größerem Verkehrsaufkommen, sind ISDN-Primärschnittstellen S2M zwischen den Kommunikationssystemen KS vorgesehen - im Blockschaltbild durch die Bezeichnung [S2M] angedeutet. Das erfindungsgemäße Verfahren wird gemäß dem Blockschaltbild mit jeweils einer SO-Schnittstelle SO erläutert. Die SO-Schnittstellen SO zu den weiteren, nicht dargestellten Kommunikationssystemen KS(x), KS(y) des Kommunikationsnetzes KN und zu den Kommunikationsendgeräten KE sind im Kommunikationssystem KS durch Teilnehmeranschlußmodule SLM realisiert. Die im Blockschaltbild gezeigten Teilnehmeranschlußmodule SLM sind beispielsweise durch ein einziges oder alternativ durch mehrere Teilnehmeranschlußmodule SLM mit mehreren SO-Schnittstellen SO realisiert. Eine SO-Schnittstelle SO umfaßt zwei Nachrichtenkanäle N1,2 sowie für die Verbindungssteuerung einen Signalisierungskanal D, über den Signalisierungsinformationen si zum Aufbau und Abbau einer Verbindung sowie zur Verbindungssteuerung während einer aufgebauten Verbindung übermittelt werden. Hierbei weisen die über die Nachrichtenkanäle N1,2 übermittelten Nachrichtenströme A, B eine Bitrate von 64 KBit/s und der Signalisierungskanal D eine Bitrate von 16 Kbit/s auf.

Für das Ausführungsbeispiel sei angenommen, daß über die beiden Nachrichtenkanäle N1,2 nur komprimierte Sprachinformationen spi' übermittelt werden. Dies bedeutet, daß die Ausgänge der beiden, die SO-Schnittstelle SO zu weiteren Kommunikationssystemen KS(x), KS(y) realisierenden Teilnehmeranschlußmodule SLM jeweils auf einen Eingang E eines Sprachkomprimierungsmoduls VCM geführt sind. Ausgänge A der beiden dargestellten Sprachkomprimierungsmodule VCM sowie Ausgänge A des mit den Kommunikationsendgeräten KE verbundenen Teilnehmeranschlußmoduls SLM sind mit einem Koppelfeld KF verbunden, mit dessen Hilfe Kommunikationsbeziehungen zwischen den angeschlossenen Kommunikationsendgeräten KE des Kommunikationssystems KS und auch weiteren Kommunikationssystemen KS(x), KS(y) des Kommunikationsnetzes KN vermittelt werden. Die Einstellung dieses Koppelfeldes KF anhand der übermittelten Signalisierungsinformationen si wird durch eine Steuerung ST bewirkt, die sowohl mit dem Koppelfeld KF als auch mit allen anderen Komponenten SLM, VCM des Kommunikationssystems KS verbunden ist. Da in ISDN-Kommunikationsnetzen KN die Sprachinformationen spi üblicherweise digitalisiert mit einer Bitrate von 64 KBit/s vermittelt und übermittelt werden, ist das Koppelfeld KF auf eine Vermittlungsbitrate von 64 KBit/s abgestimmt. Dies bedeutet, daß über das Koppelfeld KF nur Verbindungen mit einer Bitrate von 64 KBit/s vermittelt werden können.

Für das Ausführungsbeispiel sei angenommen, daß von Kommunikationsendgeräten KE übermittelte, digitalisierte Sprachinformationen spi bei Kommunikationsbeziehungen innerhalb eines Kommunikationssystems KS unkomprimiert vermittelt und zum Ziel-Kommunikationsendgerät KE übermittelt werden. Bei Kommunikationsbeziehungen, die zumindest an ein weiteres Kommunikationssystem KS(x), KS(y) zu vermitteln bzw. übermitteln sind, ist eine Komprimierung der Sprachinformationen spi vorgesehen. Vorteilhaft erfolgt diese Komprimierung gemäß dem standardisierten Komprimierungsverfahren G.728. Nach diesem Komprimierungsverfahren werden die Sprachinformationen spi in komprimierte Sprachinformationen spi' mit einer Bitrate von 16 Kbit/s bei einer vorteilhaften Verzögerungszeit von 1 bis 2 msek. komprimiert. Dieses standardisierte Komprimierungsverfahren bietet eine hohe Sprachqualität und erfordert aufgrund der geringen Verzögerungszeiten keine zusätzliche Echokompensation. Bezogen auf das Ausführungsbeispiel wird die vom ersten Kommunikationsendgerät KE(1) übermittelte, digitalisierte Sprachinformation spi (1) gemäß den beim Verbindungsaufbau übermittelten Signalisierungsinformationen si über das Koppelfeld KF vermittelt und an das Sprachkomprimierungsmodul VCM weitergeleitet. In diesem werden die Sprachinformationen spi(1) gemäß dem Komprimierungsverfahren G.728 in komprimierte Sprachinformationen spi' (1) komprimiert und in den ersten Nachrichtenstrom A mit einer Bitrate von 64 KBit/s eingefügt, d.h. multiplext. Für das Ausführungsbeispiel sei weiterhin angenommen, daß die komprimierte Sprachinformation spi'(1) in den dritten Teil-Nachrichtenkanal des ersten Nachrichtenkanals N1 - durch die Bezeichnung (2) angedeutet - eingefügt wird - siehe hierzu im Blockschaltbild die schematische Darstellung der Nachrichtenkanäle N1,2 an den Zuführungsleitungen der SO-Schnittstelle SO. Aus dieser Darstellung ist zusätzlich ersichtlich, daß in den ersten Teil-Nachrichtenkanal eine Komprimierungsinformation ki eingetragen ist. Durch diese Komprimierungsinformation ki wird angezeigt, in welchem der weiteren Teil-Nachrichtenkanäle 1 bis 7 aktuell eine komprimierte Sprachinformation spi' übertragen wird. Bei einer flexiblen, d.h. dynamischen Aufteilung in Teil-Nachrichtenkanäle - nicht dargestellt - können komprimierte Sprachinformationen spi' mit unterschiedlichen Bitraten übermittelt werden, jedoch ist in den Komprimierungsinformationen ki sowohl eine die Position als auch die Bitrate der jeweiligen komprimierten Sprachinformation spi' anzeigende Information anzugeben. Der multiplexte Nachrichtenstrom A mit einer Bitrate von 64 KBit/s wird an das zugeordnete Teilnehmeranschlußmodul SLM übermittelt und in diesem an die übertragungstechnischen Bedingungen der nicht dargestellten Übertragungsstrecke angepaßt. Anschließend wird über die SO-Schnittstelle SO der Nachrichtenstrom A an das betroffene Kommunikationssystem KS(x) des Kommunikationsnetzes KN weitergeleitet.

Des weiteren sei beim Ausführungsbeispiel angenommen, daß über ein weiteres Kommunikationssystem KS(y) im ersten Nachrichtenstrom A in dessen dritten Nachrichtenkanal (2) eine komprimierte Sprachinformation spi'(y) empfangen und zusammen mit der empfangenen Komprimierungsinformation ki an das Sprachkomprimierungsmodul VCM übermittelt wird. Mit Hilfe des Sprachkomprimierungsmoduls VCM wird die komprimierte Sprachinformation spi'(y) aus dem Nachrichtenstrom A entnommen, d.h. demultiplext und zu einer digitalisierten Sprachinformation spi(y) dekomprimiert. Diese wird über das Koppelfeld KF gemäß der mit der Steuerung ST aufgebauten Verbindung an ein durch den Verbindungsaufbau bestimmtes zweites Kommunikationsendgerät KE(2) vermittelt bzw. übermittelt. Das vorhergehend erläuterte Verfahren ist in einem Kommunikationssystem KS vorgesehen, daß für die jeweils aufgebaute Verbindung ein Ziel-Kommunikationssystem KS(D) repräsentiert.

Repräsentiert das dargestellte Kommunikationssystem KS ein Transit-Kommunikationssystem KS(T), so wird die beispielsweise von dem Kommunikationssystem KS(x) des Kommunikationsnetzes KN im siebten Teil-Nachrichtenkanal [6] des zweiten Nachrichtenkanals N2 übermittelte komprimierte Sprachinformation spi'(x) an das Sprachkomprimierungsmodul VCM übermittelt. In diesem wird die komprimierte Sprachinformation spi'(x) nicht dekomprimiert, sondern erfindungsgemäß in einen Informationsstrom is mit einer Bitrate von 64 KBit/s eingefügt. Dieses Entnehmen und Einfügen wird mit bekannter Multiplextechnik realisiert. Dieser an die Vermittlungsbitrate des Koppelfeldes KF angepaßte Informationsstrom is kann nun über das Koppelfeld vermittelt und wiederum dem Sprachkomprimierungsmodul VCM zugeführt werden. In diesem wird die komprimierte Sprachinformation spi'(x) aus dem Informationsstrom is wieder entnommen und in einen sechsten Teil-Nachrichtenkanal [5] des zweiten Nachrichtenkanals N2 eingefügt. Dieses Entnehmen und Einfügen kann wiederum mit bekannter Multiplextechnik realisiert werden. Erfindungswesentlich ist die Anpassung der komprimierten Sprachinformation spi' an die Vermittlungsbitrate des Koppelfeldes und die Vermittlung der angepaßten, komprimierten Sprachinformation spi' über das Koppelfeld. Diese Anpassung wird durch einfaches Multiplexen der komprimierten Sprachinformation spi' - im Ausführungsbeispiel mit einer Bitrate von 16 KBit/s - bewirkt und ist einfach durch Einsatz bekannter Multiplextechnik - handelsübliche Schaltkreistechnik - realisierbar. Die vermittlungstechnischen Einstellungen des Koppelfeldes KF bei einer eingerichteten Verbindung, bei dem das dargestellte Kommunikationssystem KS ein Transit-Kommunikationssystem KS(T) repräsentiert, werden beim Verbindungsaufbau durch die übermittelten Signalisierungsinformationen si bewirkt.

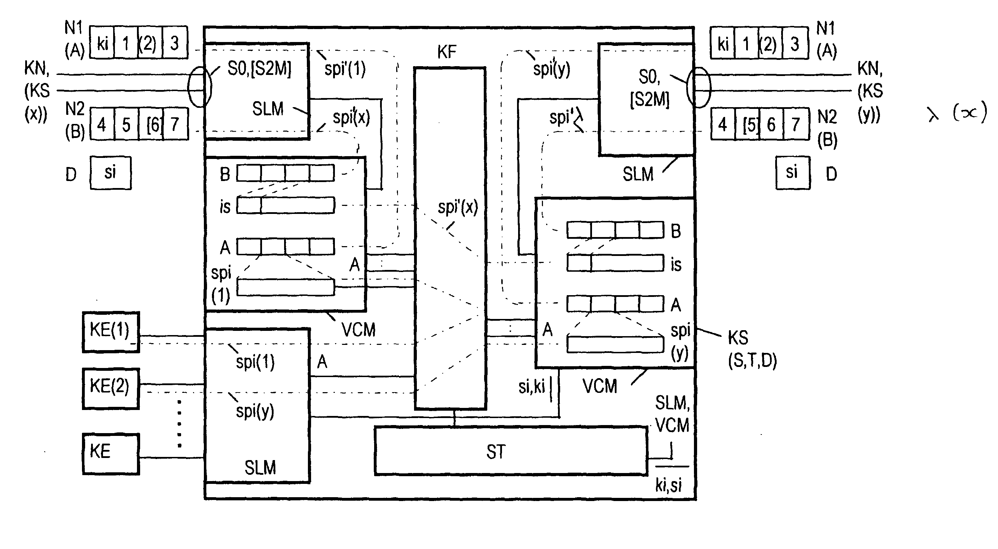

## Patentansprüche

1. Verfahren zum verbindungsorientierten Übermitteln von komprimierte, digitalisierte Sprachinformationen (spi') aufweisenden Nachrichtenströmen (A,B) in einem mehrere zumindest teilweise vermaschte Kommunikationssysteme (KS) aufweisenden Kommunikationsnetz (KN),
- bei dem mit Hilfe von Signalisierungsinformationen (si) Verbindungen über die Kommunikationssysteme (KS) zumindest temporär eingestellt werden,
- bei dem in einem ersten Nachrichtenstrom (A,B) empfangenden Kommunikationssystem (KS) die eintreffenden, komprimierten, digitalen Sprachinformationen (spi') aus dem Nachrichtenstrom (A,B) entnommen und verbindungsgemäß, komprimiert vermittelt und in einen zweiten Nachrichtenstrom (A,B) eingefügt werden, sofern das Kommunikationssystem (KS) bezogen auf die jeweilige komprimierte, digitale Sprachinformation (spi') als Transit-Kommunikationssystem (KS(T)) eingestellt ist,
**dadurch gekennzeichnet,**
**daß** die Position und die Bitrate der jeweiligen komprimierten Sprachinformationen (spi') anzeigende Komprimierungsinformationen (ki) zusammen mit den komprimierten Sprachinformationen (spi') übermittelt werden.

2. Verfahren nach Anspruch 1,
**dadurch gekennzeichnet,**
**daß** in den Kommunikationssystemen (KS) die jeweils aus dem Nachrichtenstrom (A,B) entnommene komprimierte Sprachinformation (spi') an die Vermittlungsbitrate der Kommunikationssysteme (KS) angepaßt wird.

3. Verfahren nach Anspruch 1 oder 2,
**dadurch gekennzeichnet,**
**daß** die Komprimierungsinformationen (ki) für zumindest zwei komprimierte Sprachinformationen (spi') in einem Teil-Nachrichtenkanal (1...7) des Nachrichtenstromes (A,B) übermittelt werden.

4. Verfahren nach einem der Ansprüche 1 bis 3,
**dadurch gekennzeichnet,**
**daß** eine digitalisierte Sprachinformation (spi) mit einer Bitrate von 64 kbit/s mit Hilfe von Komprimierungsverfahren zu Sprachinformation (spi') mit Bitraten von 32, 16, 8 oder 2 kbit/s komprimiert wird, wobei bei einer Komprimierung zu 16 kbit/s ein Komprimierungsverfahren gemäß dem ITU-Standard G.728 realisiert ist.

5. Verfahren nach einem der Ansprüche 1 bis 4,
**dadurch gekennzeichnet,**
**daß** eine komprimierte Sprachinformation (spi') mit einer Bitrate von 32, 16, 8 oder 2 kbit/s zur Vermittlung in einem Transit-Kommunikationssystem (KS(T)) in einen Informationsstrom (is) mit einer Vermittlungsbitrate von 64 kbit/s eingefügt wird.

6. Verfahren nach Anspruch 1,
**dadurch gekennzeichnet,**
**daß** mehrere komprimierte Sprachinformationen (spi') sowie die Komprimierungsinformationen (ki) zu einem Nachrichtenstrom (A,B) mit einer Übertragungsgeschwindigkeit von 56 bzw. 64 kbit/s gemultiplext werden.

7. Verfahren nach Anspruch 1,
**dadurch gekennzeichnet,**
**daß** mehrere komprimierte Sprachinformationen (spi') sowie die Komprimierungsinformationen (ki) zu einem Nachrichtenstrom (A,B) mit einer Übertragungsgeschwindigkeit von m x 56 bzw. m x 64 kbit/s gemultiplext werden.

8. Kommunikationssystem zum verbindungsorientierten Übermitteln von komprimierten, digitalisierten Sprachinformationen (spi') zwischen in einem Kommunikationsnetz (KN) angeordneten Kommunikationssystemen (KS),
- mit Multiplex- bzw. Demultiplexmitteln (VCM) zum Einfügen bzw. Entnehmen der komprimierten Sprachinformationen (spi') in einen bzw. aus einem Nachrichtenstrom (A,B) und zum Übermitteln an ein weiteres Kommunikationssystem (KS(x),KS(y)),
- mit Vermittlungsmittel (KF,ST) zum verbindungsgemäßen Vermitteln der entnommenen, komprimierten Sprachinformationen (spi')
**gekennzeichnet durch,**
Multiplexmittel (VCM) zum Einfügen von die Position und die Bitrate der jeweiligen komprimierten Sprachinformationen (spi') anzeigende Komprimierungsinformationen (ki) in den Nachrichtenstrom (A,B).

9. Kommunikationssystem nach Anspruch 8,
**dadurch gekennzeichnet,**
**daß** Multiplexmittel (VCM) zum Anpassen der Bitrate der komprimierten Sprachinformation (spi') an die Vermittlungsbitrate vorgesehen sind.

10. Kommunikationssystem nach Anspruch 8,
**dadurch gekennzeichnet,**
**daß** Bewertungsmittel (VCM,ST) zur Bewertung der übermittelten Komprimierungsinformationen (ki) und Einstellmittel (VCM) zur Aktivierung von Dekomprimier- bzw. den Demultiplexmittel (VCM) in Abhängigkeit vom Bewertungsergebnis vorgesehen sind.

## Claims

1. Method for connection-oriented transmission of message streams (A,B), with compressed voice information (spi') in a communication network (KN) in several at least partially intermeshed communication systems (KS),
- with connections being at least temporarily set via the communication system (KS) with the aid of signalling information (si),
- with the incoming compressed digital voice information (spi') in a communication system (KS) receiving a first message stream (A,B) being taken from the message stream (A,B) and according to the connection, switched, still compressed, and inserted into a second message stream (A,B), provided the communication system (KS) is set as a transmit communication system (KS(T)) relative to the particular compressed, digital voice information (spi'),
**characterised in that**
the compression information (ki) indicating the position and bit rate of the particular compressed voice information (spi') is transmitted together with the compressed voice information (spi').

2. Method in accordance with Claim 1, **characterised in that** in the communication systems (KS) the compressed voice information (spi') taken in each case from the message stream (A,B) is matched to the switching bit rate of the communication systems (KS).

3. Method in accordance with Claim 1 or 2, **characterised in that** the compression information (ki) for at least two items of compressed voice information (spi') is transmitted in a part-message channel (1...7) of the message stream (A,B).

4. Method in accordance with one of the preceding Claims 1 to 3, **characterised in that** one piece of digitised voice information (spi) is compressed with a bit rate of 64 kbit/s with the aid of compression methods to form voice information (spi') with the bit rates of 32, 16, 8 or 2 kbit/s, with a compression method in accordance with ITU standard G.728 being realised for a compression to 16 kbit/s.

5. Method in accordance with Claims 1 to 4, **characterised in that** a piece of compressed voice information (spi') with a bit rate of 32, 16, 8 or 2 kbit/s is inserted into an information stream (is) with a switching bit rate of 64 kbit/s for switching in a transmit communication system (KS(T)).

6. Method in accordance with Claim 1, **characterised in that** several pieces of compressed voice information (spi') as well as the compression information (ki) are multiplexed to form a message stream (A,B) with a transmission rate of 56 or 64 kbit/s.

7. Method in accordance with Claim 1, **characterised in that** several pieces of compressed voice information (spi') as well as the compression information (ki) are multiplexed to form a message stream (A,B) with a transmission rate of m x 56 or m x 64 kbit/s.

8. Communication system for connection-oriented transmission of compressed, digitised voice information (spi') between communication systems (KS) arranged in a communication network (KN),
- with multiplexing or demultiplexing means (VCM) for insertion or removal of the compressed voice information (spi') into, or out of, a message stream (A,B) and for transmitting to a further communication system (KS(x),KS(y)),
- with switching means (KF,ST) for switching the received, compressed voice information (spi') in accordance with the connection,
**characterised by**
multiplexing means (VCM) for inserting compression information (ki) indicating the position and bit rate of the particular compressed voice information (spi') into the message stream (A,B).

9. Communication system in accordance with Claim 8, **characterised in that** multiplexing means (VCM) are provided for matching the bit rate of the compressed voice information (spi') to the switching bit rate.

10. Communication system in accordance with Claim 8, **characterised in that** assessment means (VCM,ST) for assessing the transmitted compression information (ki) and setting means (VCM) for activating decompression or demultiplexing means (VCM) relative to the result of the assessment are provided.

## Revendications

1. Procédé destiné à la transmission orientée connexion de flux de données (A, B), qui comportent des informations vocales numérisées et comprimées (spi'), dans un réseau de communication (KN) comportant plusieurs systèmes de communication (KS) au moins partiellement maillés entre eux,
- dans lequel, à l'aide d'informations de signalisation (si), des liaisons sont réglées, au moins temporairement, à travers les systèmes de communication (KS),
- dans lequel, dans un système de communication (KS), qui reçoit un premier flux de données (A, B), les informations vocales numérisées et comprimées (spi') en arrivée sont extraites du flux de données (A, B) et, conformément à la liaison, commutées sous forme comprimée et insérées dans un deuxième flux de données (A, B), dans la mesure où le système de communication (KS) est réglé comme système de communication de transit (KS(T)) par rapport à l'information vocale numérisée et comprimée concernée,
**caractérisé par le fait**
**que** les informations de compression (ki) annonçant la position et le débit binaire des informations vocales comprimées respectives (spi') sont transmises en commun avec les informations vocales comprimées (spi').

2. Procédé selon la revendication 1
**caractérisé par le fait**
**que**, dans les systèmes de communication (KS), l'information vocale comprimée (spi') extraite, dans chaque cas, du flux de données (A, B) est adaptée au débit binaire de commutation des systèmes de communication (KS).

3. Procédé selon la revendication 1 ou 2
**caractérisé par le fait**
**que** les informations de compression (ki) pour au moins deux informations vocales comprimées (spi') sont transmises dans un canal partiel de données (1 ... 7) du flux de données (A, B).

4. Procédé selon l'une des revendications 1 à 3
**caractérisé par le fait**
**qu'**une information vocale numérisée (spi) ayant un débit binaire de 64 kbit/s est comprimée, à l'aide d'un procédé de compression, pour donner une information vocale (spi') ayant des débits binaires de 32, 16, 8 ou 2 kbit/s, un procédé de compression étant réalisé, dans le cas d'une compression à 16 kbit/s, conformément à la norme UIT G.728.

5. Procédé selon l'une des revendications 1 à 4
**caractérisé par le fait**
**qu'**une information vocale comprimée (spi') ayant un débit binaire de 32, 16, 8 ou 2 kbit/s est insérée, pour la commutation dans un système de communication de transit (KS(T)), dans un flux de données (is) ayant un débit binaire de commutation de 64 kbit/s.

6. Procédé selon la revendication 1
**caractérisé par le fait**
**que** plusieurs informations vocales comprimées (spi'), ainsi que les informations de compression (ki) sont multiplexées pour donner un flux de données (A, B) ayant une vitesse de transmission de 56 ou de 64 kbit/s.

7. Procédé selon la revendication 1
**caractérisé par le fait**
**que** plusieurs informations vocales comprimées (spi'), ainsi que les informations de compression (ki), sont multiplexées pour donner un flux de données (A, B) ayant une vitesse de transmission de m x 56 ou de m x 64 kbit/s.

8. Système de communication destiné à la transmission orientée connexion d'informations vocales numérisées et comprimées (spi') entre des réseaux de communication (KS) disposés dans un réseau de communication (KN),
- ayant des moyens de multiplexage et, respectivement, des moyens de démultiplexage (VCM) destinés à insérer et, respectivement, à extraire les informations vocales comprimées (spi') dans un flux de données (A, B) et, respectivement, à les extraire d'un flux de données (A, B) et à les transmettre à un autre système de communication (KS(x), KS(y)),
- ayant des moyens de commutation (KF, ST) destinés à commuter conformément à la liaison les informations vocales comprimées extraites (spi'),
**caractérisé par**
des moyens de multiplexage (VCM) destinés à insérer, dans le flux de données (A, B), des informations de compression (ki) indiquant la position et le débit binaire des informations vocales comprimées respectives (spi').

9. Système de communication selon la revendication 8
**caractérisé par le fait**
**qu'**il est prévu des moyens de multiplexage (VCM) destinés à adapter le débit binaire de l'information vocale comprimée (spi') au débit binaire de commutation.

10. Système de communication selon la revendication 8
**caractérisé par le fait**
**qu'**il est prévu des moyens d'évaluation (VCM, ST) destinés à évaluer les informations de compression transmises (ki) et des moyens de réglage (VCM) destinés à activer des moyens de décompression ou de démultiplexage (VCM) en fonction du résultat de l'évaluation.
